Europäisches Patentamt

European Patent Office

Office européen des brevets

(19)

(11) EP 0 691 527 B1

(12) FASCICULE DE BREVET EUROPEEN

(45) Date de publication et mention
de la délivrance du brevet:
**24.10.2001 Bulletin 2001/43**

(51) Int Cl.[7]: **G01F 1/74**

(21) Numéro de dépôt: **95401410.6**

(22) Date de dépôt: **15.06.1995**

(54) **Dispositif et méthode de mesure de profil de vitesse dans un fluide polyphasique**

Vorrichtung und Verfahren zum Messen des Geschwindigkeitsprofiles in einem Mehrphasenfluid

Apparatus and method for measuring the velocity profile in a polyphase fluid

(84) Etats contractants désignés:
**DK GB IT NL**

(30) Priorité: **05.07.1994 FR 9408380**

(43) Date de publication de la demande:
**10.01.1996 Bulletin 1996/02**

(73) Titulaire: **INSTITUT FRANCAIS DU PETROLE**
**92500 Rueil Malmaison (FR)**

(72) Inventeurs:
 • **Constant, Michel**
   **F-93200 Saint Denis (FR)**
 • **Reminieras, Jean-Pierre**
   **F-37000 Tours (FR)**

(56) Documents cités:
   **EP-A- 0 161 956**      **WO-A-93/19347**
   **DE-A- 4 025 952**      **US-A- 4 402 230**

**Description**

La présente invention concerne une méthode et un dispositif permettant de réaliser un profil de vitesse d'un fluide comportant au moins deux phases distinctes, le fluide étant en écoulement.

L'invention s'applique particulièrement bien à la détermination de la vitesse d'une phase gazeuse et de la vitesse d'une phase liquide, en circulation dans une conduite.

Appliquée au domaine pétrolier, la présente invention permet, notamment d'obtenir la vitesse de la phase organique, de la phase aqueuse et de la phase gazeuse constituant dans la majorité des cas un effluent polyphasique de type pétrolier. Il est ainsi possible d'obtenir la répartition des vitesses pour chacune de ces phases.

Les écoulements de fluide polyphasique, notamment les effluents de type pétrolier, présentent des régimes à faciès nombreux, rapidement variables qui nécessitent des dispositifs et des procédés de mesure rapides. De tels dispositifs permettent, notamment, d'obtenir des mesures en temps réel de la vitesse de chaque phase constituant cet effluent.

Une mesure de la vitesse de circulation d'une phase en temps réel permet, par exemple, associée à la connaissance de la quantité de cette phase de déterminer son débit réel. Ainsi, pour un effluent polyphasique comportant, par exemple, une phase aqueuse, une phase organique et une phase gazeuse, la connaissance des débits de chacune de ces phases, déterminés simultanément en sortie de puits de production pétrolière est nécessaire, notamment pour le contrôle et la sécurité du réseau de collecte amenant les effluents bruts vers un centre de séparation et/ou de traitement.

Elle trouve aussi son application dans le domaine du transport sans séparation des phases d'un fluide polyphasique. En effet, le transfert d'un tel fluide, par exemple d'une source vers un lieu de traitement, nécessite dans la plupart des cas l'utilisation de dispositifs de pompage dont le fonctionnement optimal est relié à la connaissance du débit de la phase liquide et du rapport volumétrique gaz/liquide de ce fluide.

L'invention trouve aussi son application dans des domaines autre que le domaine pétrolier, tels que des domaines où les fluides comportent plusieurs phases de nature distinctes pour lesquels il est souhaitable de connaître la répartition des vitesses pour chacune des phases.

On entend par champ de vitesse ou profil de vitesse l'ensemble des valeurs que peut prendre le vecteur vitesse en différents endroits, par exemple, d'une conduite dans laquelle circule le fluide polyphasique.

Il est connu par l'art antérieur d'effectuer des mesures de vitesse par effet Doppler.

Ainsi, le document US 4919536 décrit un procédé permettant d'obtenir un champ de vitesse d'un fluide comportant une phase liquide et une phase gazeuse par effet Doppler. Ce brevet enseigne d'éclairer avec une lumière chromatique le fluide et de mesurer le décalage en fréquence de l'onde lumineuse diffusée par les particules incluses dans le fluide, ce décalage étant caractéristique du mouvement des particules.

Ce dispositif est mal adapté pour des fluides comportant une phase opaque, telle que l'on rencontre dans les effluents pétroliers, puisque la lumière chromatique ou non y pénètre très difficilement.

Les brevets US 4640292, US 4680739 décrivent des dispositifs et des procédés de mesure de la vitesse de particules en écoulement dans le sang en utilisant l'effet Doppler afin de déterminer la vitesse de particules.

Les dispositifs précédemment cités sont donc bien adaptés pour déterminer la vitesse d'une phase en écoulement, telle qu'une phase solide, ou une phase liquide et des phases présentant de faibles opacités. Néanmoins, ils ne permettent pas d'obtenir la vitesse pour chacune des phases incluses dans un fluide polyphasique, quelque soient les caractéristiques physiques de ces phases.

Dans la majorité des cas, on déduit en effet la vitesse de la phase gazeuse à partir de la vitesse de la phase liquide et d'autres données telles les quantités des deux phases, et de paramètres propres en fluide.

De plus, la méthode de traitement des signaux utilisés dans ces dispositifs est basée sur une inter corrélation de deux signaux conduisant à une valeur de vitesse moyenne du fluide.

En outre, les dispositifs de l'art antérieur ne respectent pas toujours au mieux les normes de sécurité demandées dans l'industrie pétrolière, du fait de la nature des rayonnements qu'ils utilisent.

La présente invention vise à pallier les inconvénients mentionnés ci-dessus. Elle permet en particulier de déterminer de façon précise et rapide la vitesse de chaque phase constituant un fluide polyphasique, quelque soient les caractéristiques physique des phases.

Elle trouve son application, notamment, pour obtenir la vitesse de chaque phase contenue dans un effluent de type pétrolier, et réaliser un champ de vitesse pour cet effluent.

Dans toute la suite de la description, on entend par "onde perturbée", une onde dont au moins une caractéristique ou au moins un paramètre physique qui lui est associé, l'amplitude ou la phase, par exemple, a varié. Cette variation peut résulter de la rencontre de l'onde avec un obstacle présent dans un milieu polyphasique dans lequel elle se propage.

De manière identique, les mots "antenne" et "transducteur" sont employés pour désigner un même moyen d'émission et/ou de réception d'une onde.

La méthode selon la présente invention permet de déterminer la vitesse de chaque phase d'un fluide polyphasique, ledit fluide comportant au moins une phase liquide et une phase gazeuse inclus dans un volume tel qu'une conduite. Elle est caractérisée en ce qu'elle comporte au moins les étapes suivantes :

- a) on émet une première onde à une fréquence donnée f1 choisie en fonction de la phase liquide et une seconde onde à une fréquence donnée f2 choisie en fonction de la phase gazeuse et on mesure au moins un paramètre caractéristique d'une partie de la première onde perturbée ayant traversé ledit fluide polyphasique en un premier endroit de la conduite et au moins un paramètre caractéristique d'au moins une partie de la seconde onde ayant traversé le fluide en un second endroit de la conduite,
- b) on discrimine à partir d'un traitement approprié les paramètres mesurés au cours de l'étape a) sur le fluide en circulation, et
- c) à partir des valeurs des paramètres discriminées, on déduit à l'aide d'un traitement approprié le champ de vitesse de la phase liquide et/ou de la phase gazeuse pour une section donnée du volume.

On peut choisir de mesurer comme paramètres l'amplitude et/ou le déphasage de la partie de l'onde perturbée ayant traversé ledit fluide polyphasique.

On peut émettre la première onde à une fréquence ayant une valeur pouvant être comprise entre 0,5 et 5 MHz, de préférence entre 1,5 et 3 MHz et/ou la seconde onde à une fréquence dont la valeur peut être comprise entre 0,1 et 1 MHz.

On peut utiliser au cours de l'étape c) un traitement basé sur des techniques de traitement fréquentiel de l'information telles que la technique d'auto-régression, ou encore la technique d'auto-régression à moyenne glissante ou encore faire appel à une technique du maximum de vraisemblance pour déterminer la vitesse d'une phase.

Pour un milieu polyphasique en écoulement dans une conduite, on mesure, par exemple les paramètres de la première onde perturbée en plusieurs endroits situés selon une hauteur de la conduite et de la seconde onde perturbée en plusieurs endroits situés selon une hauteur de la conduite, ledit premier endroit étant situé à proximité du second endroit.

L'onde émise peut être une onde électromagnétique, telles que des micro-ondes.

On peut aussi émettre des ondes ultrasonores.

La présente invention concerne aussi un dispositif permettant de mesurer la vitesse de chaque phase d'un milieu polyphasique en écoulement, ledit milieu comportant au moins une phase liquide et une phase gazeuse. Il est caractérisé en ce qu'il comporte en combinaison :

- des moyens d'émission adaptés à ladite phase liquide de manière à émettre une première onde à une première fréquence f1 et des moyens de réception adaptés à la phase liquide de manière à recevoir l'onde ayant traversé ledit milieu polyphasique,
- des moyens d'émission adaptés à la phase gazeuse pour émettre une seconde onde au milieu polyphasique à une seconde fréquence f2 et des moyens de réception adaptés à la phase gazeuse de ladite seconde onde ayant traversé le milieu,
- des moyens de mesure d'au moins un paramètre de la première onde perturbée et d'au moins un paramètre de la seconde onde perturbée après la traversée du milieu polyphasique
- des moyens de discrimination des paramètres mesurés, et
- un dispositif de traitement desdites mesures discriminées pour déduire directement de ces mesures la valeur de vitesse associée à la phase liquide et pour la phase gazeuse.

On peut utiliser comme les moyens d'émission des antennes émettrices-réceptrices et/ou des antennes émettrices ou réceptrices constituées d'un matériau choisi dans le groupe des piézo-électriques et/ou des piézo-composites.

Lorsque l'on effectue les mesures, par exemple, en transmission et sur un milieu polyphasique, constitué, par exemple, par un fluide en écoulement dans une conduite, les moyens d'émission et les moyens de réception sont positionnés de part et d'autre de la conduite.

Le milieu polyphasique étant un fluide en écoulement dans une conduite, et la méthode faisant appel à la diffusion des ondes, les moyens d'émission et les moyens de réception sont positionnés, par exemple, du même côté de la conduite, de préférence à proximité l'un de l'autre.

Les moyens d'émission et de réception peuvent comporter une pluralité d'éléments jouant le rôle d'émetteurs et/ou de récepteurs .

La méthode et le dispositif associé s'appliquent particulièrement bien à la détermination du champ de vitesse de la phase liquide et de la phase gazeuse d'un fluide polyphasique comportant au moins une phase aqueuse au moins une phase liquide et au moins une phase organique.

Ainsi, la présente invention offre de nombreux avantages par rapport aux procédés habituellement utilisés dans l'art antérieur. En effet, elle permet d'obtenir de façon rapide et précise la vitesse associée à une phase constituant un fluide polyphasique.

Elle offre de plus l'avantage d'être non intrusive.

La rapidité de la méthode et du dispositif permettant sa mise en oeuvre, permet d'effectuer en temps réel une mesure des vitesses pour des phases ayant des vitesses différentes. Par l'expression 'temps réel' il faut entendre que la durée de la mesure est inférieure à la variation spatio temporelle du milieu polyphasique, c'est-à-dire à la variation de vitesse des proportions des constituants ou phases de nature différentes formant ce milieu.

Un autre avantage réside dans la conception des antennes résistant à des pressions d'au moins 100 Bars et des températures d'au moins 100°C à la corrosion et à l'abrasion.

La présente invention sera mieux comprise et ses avantages apparaîtront clairement à la lecture de quelques exemples, non limitatifs, illustrés par les figures suivantes parmi lesquelles :

- les figures 1 et 1A représentent un exemple de réalisation d'un dispositif selon l'invention,
- les figures 2A, 2B, 2C, 2D et 2E schématisent plusieurs exemples possibles de disposition des transducteurs par rapport à une conduite dans laquelle circule un milieu polyphasique, et
- la figure 3 montre un autre exemple de réalisation d'un dispositif selon l'invention comportant des antennes émettrices et des antennes réceptrices.

La méthode mise en oeuvre selon la présente invention consiste, notamment, à utiliser des transducteurs adaptés à chacun des constituants formant un milieu polyphasique, c'est-à-dire dont la nature et la géométrie permet d'obtenir des mesures fiables et précises.

Elle comporte au moins une étape au cours de laquelle on discrimine les mesures d'au moins un paramètre physique d'une partie de l'onde perturbée lors de sa propagation dans un fluide polyphasique comportant des diffuseurs ou impuretés.

Les diffuseurs peuvent être des bulles de gaz incluses dans les phases liquides, des gouttelettes d'huile contenue dans de l'eau, des gouttelettes d'eau contenues dans l'huile ou des gouttelettes de liquide incluses dans la phase gazeuse, ou encore tous types d'impuretés pouvant être présentes dans le milieu polyphasique analysé, par exemple des particules solides.

Les paramètres mesurés, notamment la variation d'amplitude de l'onde, étant représentatifs de la nature de la phase traversée, il est possible, par exemple à partir de cette variation de discriminer les phases selon leur nature, notamment les phases liquides et la phase gazeuse.

Une mesure de vitesse associée permet ainsi de réaliser un profil de vitesse pour toutes les phases.

On peut ainsi utiliser une partie d'une onde rétrodiffusée lors de sa propagation dans un fluide ou une partie de l'onde diffusée, selon que l'on travaille en réflexion ou en transmission. L'onde se propageant dans le fluide peut être une onde mécanique, par exemple une onde de pression telle une onde ultrasonore, ou une onde électromagnétique telle que les micro-ondes.

La description donnée ci-après en rapport aux figures annexées est particulièrement bien adaptée pour réaliser un profil ou champ de vitesse pour un fluide polyphasique tel un effluent de type pétrolier comportant au moins une phase liquide, par exemple un mélange d'eau et d'huile, et une phase gazeuse.

Cet effluent peut aussi comporter des particules solides, tels que des hydrates et/ou du sable.

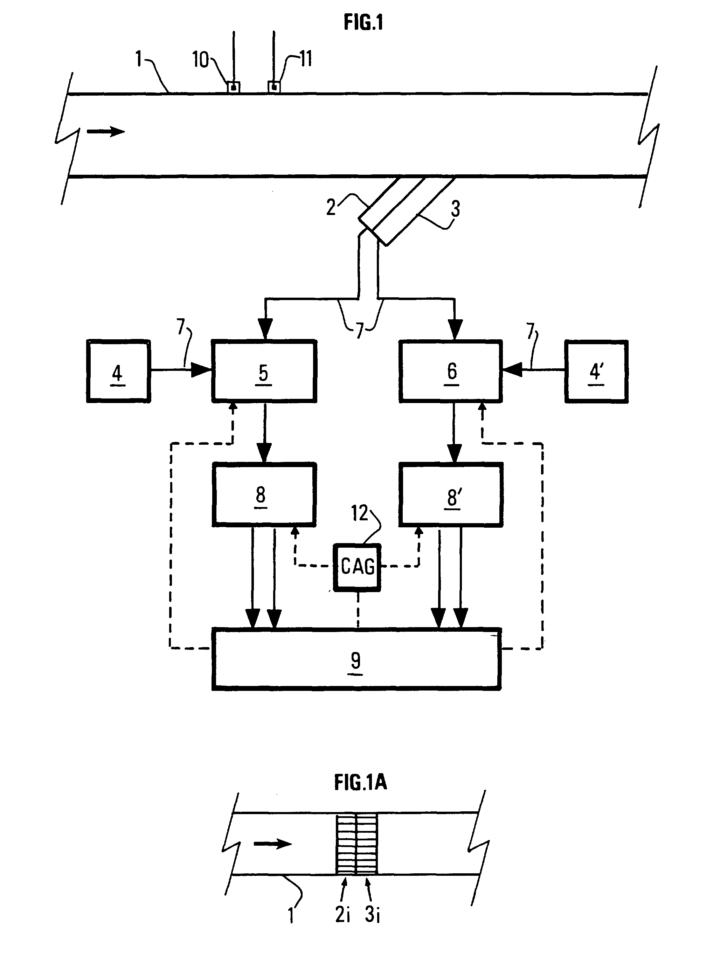

Le dispositif décrit aux figures 1 et 1A est un exemple particulier de mise en oeuvre de l'invention où l'onde émise est une onde ultrasonore, et la partie de l'onde mesurée et servant de base à la détermination du profil de vitesse est une partie de l'onde rétrodiffusée sur un diffuseur.

Le fluide polyphasique s'écoule, par exemple, dans une conduite 1, de section rectangulaire, par exemple, reliée à une source S de fluide polyphasique. La conduite 1 est équipée, par exemple, d'une antenne émission-réception 2, adaptée à la phase liquide du fluide polyphasique et d'une antenne émission-réception 3 adaptée à la phase gazeuse. Les antennes 2 et 3 peuvent se présenter sous la forme d'une barrette comportant, par exemple, une pluralité d'éléments respectivement $2i$ et $3i$ (non représentés), ces éléments ayant, notamment, pour première fonction d'émettre au moins une onde ultrasonore respectivement à une première fréquence $f1$ et une seconde fréquence $f2$ et comme seconde fonction de recevoir au moins une partie de l'onde ultrasonore rétrodiffusée sur au moins un diffuseur. La valeur de fréquence $f1$ est déterminée par rapport à la phase liquide de manière à adapter la taille des capteurs au dispositif et à obtenir le meilleur rapport signal/bruit du signal reçu par l'antenne et choisie, par exemple dans la gamme variant de 0.5 MHz à 5 MHz et de préférence entre 1.5 et 3 MHz. La fréquence $f2$ est choisie de façon à obtenir un bon compromis entre la sensibilité, la taille des émetteurs-récepteurs ou transducement et le meilleur rapport signal/bruit du signal reçu par l'antenne adaptée à la phase gazeuse et une profondeur de pénétration suffisante est choisie entre 0.1 et 1MHz et de préférence sensiblement voisine de 0.7 MHz.

Dans l'exemple de réalisation donné en rapport avec la figure 1, l'émetteur-récepteur 2 adapté à la phase liquide est positionné à proximité de l'émetteur-récepteur 3 adapté à la phase gazeuse, la distance entre ces deux émetteurs-récepteurs, est choisie, par exemple, en fonction de la nature et de la variation temporelle et spatial de la structure du fluide.

Les antennes émettrices-réceptrices sont formées par exemple :

- d'un matériau actif haute température tel qu'un piézo-électrique ou un piézo-composite haute température, transférant l'énergie électrique en vibration mécanique (et réciproquement),
- d'une face avant et d'un corps réalisé, par exemple, dans un alliage résistant aux conditions forte pression au moins égale à 100 bars et à l'abrasion due à la saumure et/ou à la pénétration de gaz,
- d'un polymère non piézo-électrique haute température.

Les choix du matériau piézo-électrique, du polymère, de l'épaisseur et de la nature de l'alliage sont déterminés, afin d'obtenir une bonne sensibilité, c'est-à-dire permettant d'obtenir un meilleur rapport signal/bruit du signal ultrasonore généré en émission et du signal électrique restitué en réception, une largeur de bande suffisamment grande pour ne pas filtrer le spectre de "l'onde perturbée" capté par le récepteur, une bonne directivité afin d'insonifier une région bien déterminée de l'espace.

Les éléments 2i et 3i d'une antenne sont positionnés, par exemple les uns au dessus des autres sur la hauteur de la conduite 1 ( Figure 1A).

Chaque élément 2i et 3i est relié, par l'intermédiaire d'un multiplexeur respectivement 5 et 6, à un générateur de tension sinusoïdal, respectivement 4 et 4'. Chaque élément 2i et 3i génère, par exemple, des ondes ultrasonores à une fréquence f1 et f2, lesdites fréquences étant choisies de manière à optimiser le rapport signal du bruit du signal reçu par les antennes en fonction de la nature des phases comprises dans le fluide polyphasique.

Les multiplexages 5 et 6 ont notamment pour rôle d'aiguiller le signal électrique émis par la source vers un élément 2i, 3i d'une antenne émettrice-réceptrice. La transmission de ces ondes s'effectue par des liaisons électrique 7 de type classiques.

Les ondes ultrasonores émises aux fréquences f1 et f2 à travers le fluide polyphasique dans lequel elles sont au moins en partie rétrodiffusées sur les impuretés, ou diffuseurs, le signal rétrodiffusé se présente sous la forme d'une ou de plusieurs ondes de pression captées par la partie récepteur des antennes 2 et 3, en particulier par chacun des éléments 2i et 3i jouant le rôle de récepteur. Ces éléments 2i et 3i transforment une onde de pression en un signal électrique. Ce signal est transmis par l'intermédiaire de liaisons classiques électriques 7 d'une part des différents éléments 2i de l'antenne émettrice-réceptrice 2 au multiplexeur 5 puis à un dispositif 8 de réception et de démodulation, et d'autre part des différentes éléments 3i de l'antenne émettrice-réceptrice 3 au multiplexeur 6 puis à un dispositif 8' de réception et de démodulation. Les dispositifs 8 et 8' ont, notamment, pour fonction de démoduler les signaux et de transmettre les signaux démodulés à un dispositif 9. Ce dispositif 9 a différentes fonctions, notamment celles de gérer l'émission et la réception des ondes de pression ou ondes acoustiques, de traiter les données et informations reçues, de générer lui-même des signaux permettant de commander les différents dispositifs, et de piloter les différentes étapes de la méthode décrite ci-après.

Le dispositif 9 peut être un micro-contrôleur équipé d'une carte d'acquisition et de génération de signaux, et d'un logiciel approprié permettant, notamment d'analyser les signaux reçus par les éléments d'antennes pour déterminer le profil de vitesse du fluide en temps réel.

Le micro-contrôleur 9 reçoit notamment les signaux démodulés provenant des dispositifs 8 et 8', et les signaux provenant de capteurs de température 10 et de pression 11. Ces capteurs enregistrent les conditions thermodynamiques dans lesquelles les mesures sont réalisées, pour éventuellement, effectuer des corrections sur les paramètres intrinsèques pris en compte pour réaliser le profil de vitesse.

Le micro-contrôleur 9 peut comporter, en outre, les valeurs des paramètres initiaux relatifs aux ondes émises et tous les paramètres nécessaires au traitement de données.

Un dispositif de contrôle de gain (CAG) 12, commandé, par exemple, par le micro-contrôleur 9, peut éventuellement être positionné après les multiplexeurs 5 et 6. Il a pour fonction d'adapter l'amplitude des signaux envoyés aux récepteurs démodulateurs 8 et 8' . Le contrôle de gain peut être automatique ou bien commandé en fonction du niveau des signaux démodulés, par l'intermédiaire du micro-contrôleur.

L'antenne émettrice-réceptrice qui est adaptée à la nature de la phase liquide du fluide polyphasique est une antenne spécifique qui permet d'être utilisée dans des conditions particulièrement dures (hautes températures, forte pression statique, importantes corrosion et abrasion). Cette antenne peut comporter un matériau de face avant ayant une forme géométrique spécifique permettant d'éviter la présence d'une cavité due à l'inclinaison de l'antenne. Ceci afin d'optimiser la transmission du faisceau ultrasonore dans le fluide.

De façon similaire, l'antenne émettrice-réceptrice 3 adaptée à la phase gazeuse est réalisée dans un matériau permettant de résister aux conditions "durcis" d'utilisation (pression au moins égale à 100 Bar, ainsi qu'à des températures au moins égales à 100°), tout en ayant des spécifications acoustiques telles qu'une sensibilité suffisante pour détecter avec les transducteurs récepteurs 3i un signal rétrodiffusé ayant une dynamique suffisante, une bande passante suffisante, une bonne directivité afin d'éviter le couplage direct entre l'émetteur-récepteur dans le cas d'un montage en transmission).

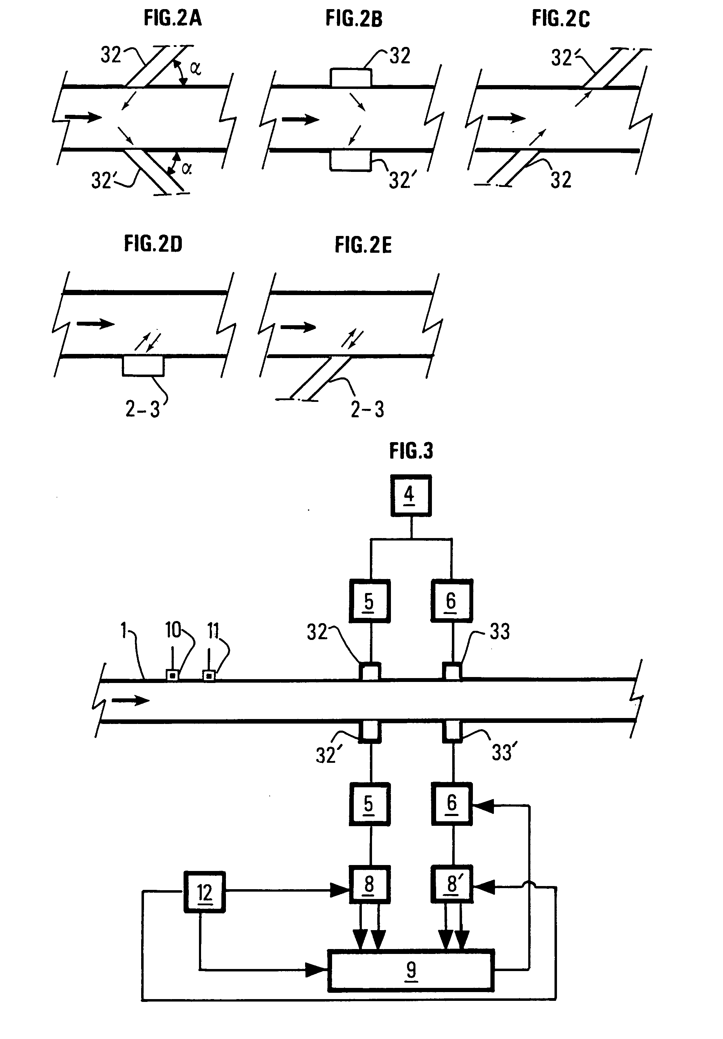

Les antennes 2 et 3 sont, par exemple, constituées d'antenne plate à lobe incliné ou d'antenne ayant, par exemple, un lobe d'émission perpendiculaire au plan de propagation de l'onde émise, l'antenne étant alors inclinée par rapport à la conduite comme l'indiquent les figures 2A, 2B, 2C, 2 D et 2E. Ces antennes selon les agencements mentionnés sur ces figures jouent un rôle d'émetteur-récepteur ou un rôle d'émetteur ou un rôle de récepteur.

Les ondes ultrasonores peuvent aussi être émises à partir d'une source unique dont on fait varier la fréquence, les valeurs des fréquences étant choisies comme il a été indiqué précédemment.

Une façon de mettre en oeuvre la méthode selon l'invention consiste, par exemple, à réaliser les étapes suivantes:

Le fluide polyphasique étant en écoulement dans la conduite 1, le micro-contrôleur 9 envoie un signal de commande aux multiplexeurs 5 et 6 pour que tous les éléments 2i du transducteur 2 transmettent au fluide en écoulement dans la conduite, une première onde ultrasonore à une fréquence f1, et tous les éléments 3i du transducteur 3 transmettent au fluide une seconde onde ultrasonore à une fréquence f2.

Le micro-contrôleur 9 peut gérer cette séquence de transmission des ondes ultrasonores de diverses manières décrites brièvement ci-après.

Il peut, par exemple, commander les multiplexeurs 5 et 6 pour obtenir une émission séquentielle de l'onde à la fréquence f1 et ensuite de l'onde à la fréquence f2, c'est-à-dire, l'une après l'autre. La première onde f1 est ainsi transmise, par l'intermédiaire du multiplexeur 5 à partir d'un premier élément 21 du transducteur 2, puis passe à un deuxième élément $2_2$ jusqu'à un dernier élément n du transducteur 2. La seconde onde f2 est ensuite transmise à partir d'un premier élément $3_1$ du transducteur 3, par l'intermédiaire du multiplexeur 6 puis ainsi de suite jusqu'au dernier élément du transducteur 3.

La cadence à laquelle on active, les uns après les autres, les éléments émetteurs 2i et 3i des antennes et à laquelle on scrute les éléments récepteurs 2i et 3i des antennes est suffisamment rapide par rapport à l'évolution de la structure du fluide. C'est-à-dire qu'il est possible d'obtenir une information pour un fluide dont la structure est supposée stable dans le temps et dans l'espace.

Le micro-contrôleur peut aussi gérer l'émission des ondes de manière simultanée. Pour cela, il commande simultanément l'émission des ondes f1 et f2 aux éléments de rang i de chacune des antennes 2 et 3, puis aux éléments i+1 et ainsi de suite jusqu'au dernier élément n des antennes et en même temps il commande simultanément les multiplexeurs 5 et 6.

Les ondes ultrasonores f1 et f2 transmises au fluide polyphasique à travers les éléments 2i et 3i vers le fluide polyphasique se propagent selon une direction faisant un angle donné par rapport à la direction d'écoulement du fluide polyphasique et sont diffusés, par exemple, au moins en partie par les diffuseurs présents dans les phases liquides et la phase gazeuse.

Les éléments récepteurs 2i et 3i des antennes reçoivent les ondes de pression rétrodiffusées par les impuretés et transmettent ces signaux à travers les multiplexeurs 5 et 6, respectivement aux récepteurs-démodulateurs 8 et 8'. Ces signaux contiennent des informations relatives à la nature de la phase traversée par l'onde et à sa vitesse d'écoulement.

Les récepteurs démodulateurs effectuent une démodulation et une détection synchrone des signaux reçus par les éléments récepteurs des antennes par combinaison, par exemple avec des signaux de référence reçus avec les signaux respectivement émis par les ondes ultrasonores rencontrant des impuretés, de manière connue des spécialistes et à l'aide de dispositifs appropriés qui permettent, notamment d'éliminer d'éventuelles composantes de couplage pouvant apparaître entre les éléments d'antennes du fait des valeurs de fréquence élevées .

A la sortie des récepteurs démodulateurs on a des signaux contenant des informations relatives à la vitesse d'une phase par l'intermédiaire de l'amplitude et du déphasage de la partie de l'onde rétrodiffusée sur une impureté et tenant compte du sens d'écoulement du fluide.

Les signaux démodulés sont ensuite transmis au micro-contrôleur 9 qui effectue alors plusieurs traitements. Pour cela le micro-contrôleur est programmé et comporte, par exemple, en mémoire des paramètres de référence, tels que les valeurs initiales des amplitudes et des phases des ondes ultrasonores émises, et des valeurs seuils permettant de discriminer les différents signaux.

Dans un premier temps, le micro-contrôleur analyse, par exemple, l'amplitude des signaux issus des récepteur-démodulateur 8 et 8', et relatifs aux éléments d'antennes 2i et 3i. Il conserve les valeurs significatives des parties rétrodiffusées de la première onde de fréquence f1 et de la seconde onde de fréquence f2, en comparant, par exemple, l'amplitude d'un signal par rapport à deux valeurs seuils prédéterminées, I1 et I2. Il effectue cette comparaison, par exemple, pour chaque signal et mémorise lorsque l'opération de comparaison est terminée les valeurs d'amplitude ainsi triées, la valeur de l'amplitude associée ainsi que le rang de l'élément i du transducteur concerné. Il peut aussi mémoriser au fur et à mesure les valeurs.

Les valeurs seuils sont, par exemple, déterminées en fonction de la nature des phases du fluide polyphasique et par rapport à la nature de l'onde émise.

A partir du terme relatif au déphasage des fréquences, le micro-contrôleur détermine la vitesse de la phase mesurée à partir de la relation classique liant la vitesse à l'écart de fréquence dû à l'effet Doppler.

$$V = \frac{F_d C_o}{2 Fe \cos\alpha}$$

où V est la vitesse de la phase

Fd = écart de fréquence Doppler

$\alpha$ = angle que fait le faisceau d'émission et de réception avec la direction d'écoulement du fluide polyphasique

Fe = fréquence d'émission de l'onde

Co = vitesse de propagation de l'onde dans le fluide polyphasique, déterminée, par exemple, par une mesure par temps de transit effectuée pour chaque séquence complète.

Connaissant le rang i de l'élément d'antenne, la nature de la phase relative à une valeur d'amplitude et la valeur de la vitesse, le micro-contrôleur détermine pour un endroit de la conduite donnée associé à un élément d'antenne, la vitesse de chacune des phases et ainsi en déduite le profil de vitesse associé au fluide polyphasique.

Le micro-contrôleur est programmé, pour une onde ultrasonore, de façon à discerner les valeurs correspondant à la partie rétrodiffusée de l'onde de fréquence f1 sur les impuretés incluses dans la ou les phases liquides et les valeurs d'amplitude correspondant à une partie de l'onde de fréquence f2 rétrodiffusée sur les impuretés incluses dans la phase gazeuse. Il est ainsi capable d'associer à une valeur d'amplitude une nature de phase constituant le fluide polyphasique. Il est aussi possible, dans certains cas, de discriminer des phases liquides de natures différentes en faisant appel à des valeur seuil sous-divisées.

En effet lorsque l'on utilise des ondes ultrasonores, l'amplitude du signal diffusé par les impuretés incluses dans la phase aqueuse, telle que de l'eau est voisine de l'amplitude du signal réfléchi par des impuretés incluses dans la phase organique, alors que ces deux amplitudes sont suffisamment éloignées de l'amplitude du signal réfléchi par des impuretés incluses dans la phase gazeuse.

A l'aide d'un choix approprié des valeurs seuils, le micro-contrôleur distingue les signaux provenant de la diffusion de l'onde ultrasonore sur des impuretés incluses dans une phase liquide ou dans une phase gazeuse.

Pour déterminer la vitesse, le micro-contrôleur peut faire appel à un traitement temporel de l'information par des techniques d'auto-correlation, ou encore à des techniques de traitement fréquentiel de l'information telles que la technique d'auto régression, ou encore la technique d'auto-régression à moyenne glissante ou encore faire appel à une technique du maximum de vraisemblance, pour déterminer la vitesse d'une phase.

Ces traitements permettent d'obtenir une bonne estimation de la fréquence Doppler même pour des faibles valeurs de rapport signal/bruit.

Les différents calculs mis en oeuvre pour déterminer la nature et la vitesse d'une phase s'effectuent, par exemple, par rapport aux paramètres initiaux associés aux ondes ultrasonores émises aux fréquences f1 et f2, les paramètres retenus dans la méthode décrite précédemment étant par exemple l'amplitude et la phase.

Les valeurs I1 et I2 utilisées dans la méthode de seuillage précédemment décrite peuvent avoir été déterminées préalablement à partir de fluides polyphasique circulant dans une conduite, par exemple, dans lesquels on émet une onde de type ultrasonore. La composition du fluide et la proportion de chaque phase contenue dans le fluide étant connues, il est ainsi possible de générer un modèle associant la nature d'une phase du fluide à une valeur d'amplitude, que l'on mémorise dans le micro-contrôleur.

Avantageusement, les valeurs seuils peuvent être affinées de façon à pouvoir discriminer les différents liquides constituant la phase liquide contenue dans le fluide polyphasique.

Ces modèles peuvent être construits à partir d'un fluide polyphasique de type pétrolier comportant, par exemple, une phase aqueuse liquide, une phase organique liquide et une phase gazeuse.

Une autre manière permettant de discriminer la nature des phases consiste à utiliser les classifieurs par réseaux neuronaux, habituellement employés dans le domaine des télécommunications.

Les figures 2A, 2B, 2C, 2D et 2E schématisent différents agencements de antennes par rapport à la conduite .

Les figures 2A et 2B sont relatives à des antennes utilisées dans la fonction (32', 33') (32, 33) d'émetteur ou dans la fonction de récepteur et sont, par exemple utilisés pour des mesures obtenues en transmission, c'est-à-dire que la méthode utilisée dans ce cas exploite une partie diffusée d'une onde sur une impureté. Une telle antenne comporte, par exemple, au moins un lobe d'émission perpendiculaire à la face d'émission et fait un angle d'inclinaison par rapport à l'axe de la conduite, l'angle étant sensiblement égal à l'angle que fait la direction de propagation des ondes ultrasonores avec la direction de propagation du fluide. Cet angle peut varier dans un intervalle compris entre 30 et 60° et est choisi de manière à optimiser le signal reçu par les récepteurs couplés aux émetteurs.

L'espace compris entre un émetteur, ou un récepteur, et la conduite, est rempli d'un matériau de préférence de type identique à celui constituant le matériau de l'émetteur ou du récepteur. De cette façon les pertes observées lors de la transmission du faisceau des ondes ultrasonores dans le fluide circulant dans la conduite sont minimisées.

Une telle disposition permet de plus d'optimiser le rapport signal/bruit en minimisant le trajet acoustique direct entre l'émetteur et le récepteur contrairement à l'exemple de la figure 2C.

Une autre possibilité schématisée sur la figure 2B relative à un dispositif travaillant en transmission, consiste à utiliser des antennes qui possèdent du fait de leur conception un seul lobe incliné. Un tel type d'antenne peut ainsi être positionné sans inclinaison de l'antenne par rapport à l'axe de la conduite. Une telle disposition conduit à un gain de place, un gain en signal et une fixation mécanique plus fiable. En effet, le faisceau d'ondes ultrasonores émis par le lobe incliné de l'antenne est déjà directif et sa direction d'émission est choisie pour améliorer le rapport signal sur bruit.

La figure 2C est une variante de la figure 2A dans laquelle l'axe d'un émetteur est aligné selon l'axe du récepteur correspondant.

Les figures 2D et 2E sont relatives à des antennes émettrices-réceptrices (2, 3) utilisées, par exemple dans le dispositif décrit en relation à la figure 1, qui exploitent une partie rétrodiffusée de l'onde. La figure 2D montre une antenne émettrice-réceptrice, de type antenne plate, ayant un lobe incliné émettant un faisceau d'ondes dans une direction déterminée, voir la flèche B, la direction d'émission faisant un angle compris, par exemple, entre 30 et 60°.

Une autre possibilité consiste à incliner l'émetteur-récepteur par rapport à l'axe de la conduite comme il est indiqué sur la figure 2E et à remplir l'espace compris entre la face de l'émetteur et la conduite avec un matériau de préférence identique aux matériaux constituant l'antenne.

Les six possibilités de positionnement des antennes par rapport à la conduite décrites précédemment sont valables pour les antennes adaptées soit à la phase liquide soit à la phase gazeuse et quelque soit le type de rayonnement utilisé.

Un autre exemple de réalisation du dispositif selon l'invention est représenté, par exemple sur la figure 3. La différence existant entre un tel dispositif et l'exemple de réalisation décrit en relation avec la figure 1 concerne principalement l'utilisation d'antennes qui ont soit un rôle d'émetteur soit un rôle de récepteur. Le terme émetteur est utilisé pour désigner une antenne ayant pour fonction d'émettre une onde et par le mot récepteur une antenne ayant pour fonction de recevoir au moins une partie de l'onde émise ayant traversé le milieu polyphasique.

Le dispositif comporte un émetteur 32 adapté aux phases liquides et un émetteur 33 adapté à la phase gazeuse, les émetteurs 32 et 33 étant positionnés d'un côté de la conduite et, de préférence voisins l'un de l'autre. L'émetteur 32 est associé et positionné, par exemple, en vis à vis d'un récepteur 32' de l'autre côté de la conduite et incliné par rapport à la conduite d'un angle, la valeur de cet angle étant choisie de façon à optimiser la réception des signaux provenant des parties des ondes ultrasonores diffusées sur les diffuseurs et transmises au récepteur.

Selon un agencement similaire, un récepteur 33' adapté à la phase gazeuse est positionné par rapport à l'émetteur 33.

Le récepteur 32' est, par exemple, relié au multiplexeur 5 et le récepteur 33' est relié au multiplexeur 6. Ces multiplexeurs sont reliés comme il a été décrit sur la figure 1 précédemment respectivement aux récepteurs-démodulateurs 8 et 8', qui sont eux-mêmes reliés au micro-contrôleur 9.

Les autres éléments du dispositif et leurs liaisons sont identiques à ceux décrits à la figure 1 et ne sont donc pas détaillés.

Les émetteurs 32, 33 et les récepteurs 32' et 33' sont de type identiques, nature et géométrie, aux émetteurs-récepteurs 2 et 3 et comportent, par exemple plusieurs éléments repérés par un rang i. Ces éléments ont par exemple au nombre de n, ce nombre étant identique pour les émetteurs et les récepteurs.

La mise en oeuvre de la méthode selon l'invention à partir d'un tel dispositif est identique à celle décrite en relation avec la figure 1.

Les antennes 32, 33, 32' et 33' utilisés dans cet exemple de réalisation peuvent aussi être constitués de barrettes d'éléments jouant le rôle d'émetteur et de récepteur similaires à ceux décrits en relation avec la figure 1, en les configurant dans une fonction, soit émettrice, soit réceptrice.

On ne sortirait pas du cadre de l'invention en disposant le dispositif de mesure selon l'invention sur une conduite dont la section est circulaire, par exemple, ou de géométrie différente de celle précédemment décrite.

Il est aussi possible de calculer la vitesse des phases en faisant appel à une mesure du temps, de transit entre deux antennes ou transducteurs, connus par les spécialistes du métier.

## Revendications

1. Méthode permettant de mesurer la vitesse de chaque phase d'un milieu polyphasique en écoulement, ledit milieu comportant au moins une phase liquide et au moins une phase gazeuse, **caractérisée en ce qu'**elle comporte au moins les étapes suivantes

   - a) on émet une première onde à une fréquence donnée f1 choisie en fonction de la phase liquide et une seconde onde à une fréquence donnée f2 choisie en fonction de la phase gazeuse et on mesure au moins un paramètre caractéristique d'une partie de la première onde perturbée ayant traversé ledit fluide polyphasique en un premier endroit d'une conduite et au moins un paramètre caractéristique d'au moins une partie de la seconde onde ayant traversé le fluide en un second endroit de la conduite,
   - b) on discrimine à partir d'un traitement approprié les paramètres mesurés au cours de l'étape a) sur le milieu polyphasique en écoulement, et
   - c) à partir des valeurs des paramètres discriminées, on déduit à l'aide d'un traitement approprié le champ de vitesse de la phase liquide et/ou de la phase gazeuse pour une section donnée de la conduite.

2. Méthode selon la revendication 1, **caractérisée en ce que** l'on mesure l'amplitude et/ou le déphasage de la partie de l'onde perturbée.

3. Méthode selon l'une des revendications 1 ou 2, **caractérisée en ce que** l'on émet la première onde à une fréquence ayant une valeur comprise entre 0,5 et 5 MHz, de préférence entre 1,5 et 3 MHz et/ou la seconde onde à une fréquence dont la valeur est comprise entre 0,1 et 1 MHz.

**4.** Méthode selon la revendication 1, **caractérisée en ce que** l'on utilise au cours de l'étape c) un traitement basé sur des techniques de traitement fréquentiel de l'information telles que la technique d'auto-régression, ou encore la technique d'auto-régression à moyenne glissante ou encore faire appel à une technique du maximum de vraisemblance pour déterminer la vitesse d'une phase.

**5.** Méthode selon l'une des revendications précédentes, **caractérisée en ce que** le milieu polyphasique étant en écoulement dans une conduite on mesure les paramètres de la première onde perturbée en plusieurs points situés selon une hauteur de la conduite en un premier endroit et de la seconde onde perturbée en plusieurs points situés selon une hauteur de la conduite en un second endroit, ledit premier endroit étant situé à proximité du second endroit.

**6.** Méthode selon l'une des revendications précédentes, **caractérisée en ce que** l'on émet des ondes ultrasonores.

**7.** Méthode selon l'une des revendications précédentes, **caractérisée en ce que** l'on émet une onde électromagnétique, telles que des micro-ondes.

**8.** Dispositif permettant de mesurer la vitesse de chaque phase d'un milieu polyphasique en écoulement, ledit milieu comportant au moins une phase liquide et une phase gazeuse, **caractérisé en ce qu'**il comporte en combinaison :

- des moyens d'émission adaptés à ladite phase liquide de manière à émettre une première onde à une première fréquence f1 et des moyens de réception adaptés à la phase liquide de manière à recevoir l'onde ayant traversé ledit milieu polyphasique,
- des moyens d'émission adaptés à la phase gazeuse pour émettre une seconde onde au milieu polyphasique à une seconde fréquence f2 et des moyens de réception adaptés à la phase gazeuse de ladite seconde onde ayant traversé le milieu,
- des moyens de mesure d'au moins un paramètre d'une partie de la première onde perturbée et d'au moins un paramètre d'une partie de la seconde onde perturbée après la traversée du milieu polyphasique,
- des moyens de discrimination des paramètres mesurés, et
- un dispositif de traitement desdites mesures discriminées pour déduire directement de ces mesures, ou paramètres mesurés, la valeur de vitesse associée à la phase liquide et/ou à la phase gazeuse.

**9.** Dispositif selon la revendication 8, **caractérisé en ce que** les moyens d'émission sont des antennes émettrices-réceptrices et/ou des antennes émettrices ou réceptrices constituées d'un matériau choisi dans le groupe des piézo-électriques et/ou des piézo-composites.

**10.** Dispositif selon la revendication 8, **caractérisé en ce que** le milieu polyphasique étant un fluide en écoulement dans une conduite, les moyens d'émission et les moyens de réception sont positionnés de part et d'autre de la conduite.

**11.** Dispositif selon la revendication 8, **caractérisé en ce que** le milieu polyphasique étant un fluide en écoulement dans une conduite, les moyens d'émission et les moyens de réception sont positionnés du même côté de la conduite.

**12.** Dispositif selon l'une des revendications 8 à 10, **caractérisé en ce que** les moyens d'émission et de réception comportent une pluralité d'éléments jouant le rôle d'émetteurs et/ou de récepteurs .

**13.** Dispositif selon l'une des revendications 8 à 13, **caractérisé en ce que** les ondes émises sont des ondes ultrasonores.

**14.** Application de la méthode et du dispositif selon l'une des revendications 1 à 13 à la détermination du champ de vitesse de la phase liquide et de la phase gazeuse d'un fluide polyphasique comportant au moins une phase aqueuse, au moins une phase liquide et au moins une phase organique.

**15.** Application de la méthode et du dispositif selon l'une des revendications 1 à 13 à la détermination du champ de vitesse d'un effluent pétrolier.

**Claims**

**1.** Method permitting measurement of the velocity of each phase of a flowing multiphase medium, said medium comprising at least one liquid phase and at least one gaseous phase, **characterised in that** it comprises at least the following steps:

- a) a first wave is transmitted at a given frequency f1 selected as a function of the liquid phase, and a second wave is transmitted at a given frequency f2 selected as a function of the gaseous phase, and at least one parameter characteristic of a portion of the first disturbed wave having crossed said multiphase fluid is measured at a first location on a pipe and at least one parameter characteristic of at least a portion of the second wave having crossed the fluid is measured at a second location on the pipe,

- b) the parameters measured in the course of the step a) on the flowing multiphase medium are discriminated by means of appropriate processing, and

- c) the velocity field of the liquid phase and/or of the gaseous phase for a given section of the pipe is deduced from the values of the discriminated parameters with the aid of appropriate processing.

2. Method according to claim 1, **characterised in that** the amplitude and/or the phase shift of the portion of the disturbed wave are measured.

3. Method according one of claims 1 or 2, **characterised in that** the first wave is transmitted at a frequency having a value of between 0.5 and 5 MHz, preferably between 1.5 and 3 MHz, and/or the second wave is transmitted at a frequency the value of which lies between 0.1 and 1 MHz.

4. Method according to claim 1, **characterised in that** in the course of the step c) use is made of processing based on information frequency processing techniques such as the autoregression technique or again the sliding average autoregression technique, or again use is made of a maximum probability technique to determine the velocity of a phase.

5. Method according to one of the preceding claims, **characterised in that** when the multiphase medium is flowing in a pipe, the parameters of the first disturbed wave are measured at a plurality of points situated according to a height of the pipe at a first location and of the second disturbed wave at a plurality of points situated according to a height of the pipe at a second location, said first location being situated close to the second location.

6. Method according to one of the preceding claims, **characterised in that** ultrasound waves are transmitted.

7. Method according to one of the preceding claims, **characterised in that** an electromagnetic wave is transmitted, such as microwaves.

8. Device permitting measurement of the velocity of each phase of a flowing multiphase medium, said medium comprising at least one liquid phase and one gaseous phase, **characterised in that** it comprises in combination:

- transmitting means adapted to said liquid phase so as to transmit a first wave at a first frequency f1, and receiving means adapted to the liquid phase so as to receive the wave having crossed said multiphase medium,

- transmitting means adapted to the gaseous phase to transmit a second wave into the multiphase medium at a second frequency f2, and receiving means adapted to the gaseous phase for said second wave having crossed the medium,

- means for measuring at least one parameter of a portion of the first disturbed wave and at least one parameter of a portion of the second disturbed wave after crossing the multiphase medium,

- means for discriminating the measured parameters, and

- a device for processing said discriminated measurements to deduce the velocity value associated with the liquid phase and/or the gaseous phase directly from these measurements or measured parameters.

9. Device according to claim 8, **characterised in that** the transmitting means are transmitting-receiving antennae and/or transmitting or receiving antennae constituted of a material selected from the group of piezoelectric and/or piezocomposite materials.

10. Device according to claim 8, **characterised in that** when the multiphase medium is a fluid flowing in a pipe, the transmitting means and the receiving means are positioned on either side of the pipe.

11. Device according to claim 8, **characterised in that** when the multiphase medium is a fluid flowing in a pipe, the transmitting means and the receiving means are positioned on the same side of the pipe.

12. Device according to one of claims 8 to 10, **characterised in that** the transmitting and receiving means comprise a plurality of elements playing the role of transmitters and/or receivers.

13. Device according to one of claims 8 to 13, **characterised in that** the transmitted waves are ultrasound waves.

14. Application of the method and the device according to one of claims 1 to 13 to determining the velocity field of the liquid phase and of the gaseous phase of a multiphase fluid comprising at least one aqueous phase, at least one liquid phase and at least one organic phase.

15. Application of the method and the device according to one of claims 1 to 13 to determining the velocity field of a petroleum effluent.

**Patentansprüche**

1. Verfahren, das es ermöglicht, die Geschwindigkeit jeder Phase eines polyphasischen, in Strömung befindlichen Mediums zu messen, wobei das Medium wenigstens eine flüssige Phase und wenigstens eine gasförmige Phase umfasst, **dadurch gekennzeichnet, dass** es wenigstens die folgenden Stufen umfasst:

   - a) man sendet eine erste Welle bei einer als Funktion der flüssigen Phase gewählten ersten gegebenen Frequenz f1 und eine zweite Welle bei einer als Funktion der gasförmigen Phase gewählten zweiten Frequenz f2 aus und misst wenigstens einen charakteristischen Parameter eines Teils der ersten gestörten Welle, welche dieses polyphasische Fluid an einem ersten Ort einer Leitung durchsetzt hat und wenigstens einen zweiten charakteristischen Parameter wenigstens eines Teils der zweiten Welle, die das Fluid an einem zweiten Ort der Leitung durchsetzt hat.

   - b) man diskriminiert ausgehend von einer geeigneten Behandlung, die während der Stufe a) polyphasischen, am im Strömungsvorgang befindlichen Medium gemessenen Parameter und

   - c) ausgehend von den Werten der diskriminierten Parameter leitet man mit Hilfe einer geeigneten Behandlung das Geschwindigkeitsfeld der flüssigen Phase und/oder der gasförmigen Phase für einen gegebenen Abschnitt der Leitung ab.

2. Verfahren nach Anspruch 1, **dadurch gekennzeichnet, dass** man die Amplitude und/oder die Phasenverschiebung des Teils der gestörten Welle misst.

3. Verfahren nach einem der Ansprüche 1 oder 2, **dadurch gekennzeichnet, dass** man die erste Welle bei einer Frequenz aussendet, die einen Wert zwischen 0,5 und 5 MHz, bevorzugt zwischen 1,5 und 3 MHz hat und/oder die zweite Welle bei einer Frequenz, deren Wert zwischen 0,1 und 1 MHz liegt.

4. Verfahren nach Anspruch 1, **dadurch gekennzeichnet, dass** man während der Stufe c) eine Behandlung anwendet, die auf den Techniken der Informationsfrequenzverarbeitung wie der Autoregressionstechnik oder auch der Autoregressionstechnik mit geglättetem Mittel beruht, oder dass man auf eine Technik des Maximums der Wahrscheinlichkeit zur Bestimmung der Geschwindigkeit einer Phase zurückgreift.

5. Verfahren nach einem der vorhergehenden Ansprüche, **dadurch gekennzeichnet, dass**, befindet sich das polyphasische Medium im Strömungsvorgang in einer Leitung, man die Parameter der ersten gestörten Welle an mehreren Punkten misst, die gemäß einer Höhe der Leitung an einem ersten Ort und der zweiten gestörten Welle an mehreren Orten angeordnet sind, die gemäß einer Höhe der Leitung an einem zweiten Ort angeordnet sind, wobei sich der erste Ort benachbart dem zweiten Ort befindet.

6. Verfahren nach einem der vorhergehenden Ansprüche, **dadurch gekennzeichnet, dass** man Ultraschallwellen aussendet.

7. Verfahren nach einem der vorhergehenden Ansprüche, **dadurch gekennzeichnet, dass** man eine elektromagnetische Welle, beispielsweise Mikrowellen, aussendet.

8. Vorrichtung, die es ermöglicht, die Geschwindigkeit jeder Phase eines polyphasischen, im Strömungszustand befindlichen Mediums zu messen, wobei das Medium wenigstens eine flüssige Phase und eine gasförmige Phase umfasst, **dadurch gekennzeichnet, dass** sie in Kombination umfasst:

   - Sendemittel, die an diese flüssige Phase derart angepasst sind, dass eine erste Welle bei einer ersten Frequenz f1 ausgesendet wird und Empfangsmittel, die derart an die flüssige Phase angepasst sind, dass die Welle, welche das polyphasische Medium durchsetzt hat, empfangen wird,

   - Sendemittel, die an die gasförmige Phase angepasst sind, um eine zweite Welle im polyphasischen Medium bei einer zweiten Frequenz f2 zu senden, und Empfangsmittel, die an die gasförmige Phase dieser zweiten Welle, welche das Medium durchsetzt hat, angepasst sind

   - Messmittel wenigstens eines Parameters eines Teils der ersten gestörten Wellen und wenigstens eines Parameters eines Teils der zweiten gestörten Welle nach Durchgang durch das polyphasische Medium

   - Diskriminierungsmittel der gemessenen Parameter und

   - eine Vorrichtung zur Verarbeitung dieser diskriminierten Messungen, um direkt aus diesen Messungen oder gemessenen Parametern den Wert der Geschwindigkeit, der der flüssigen oder der gasförmigen Phase zugeordnet ist, herzuleiten.

9. Vorrichtung nach Anspruch 8, **dadurch gekennzeichnet, dass** die Sendemittel sendende-empfangende Antennen und/oder sendende oder empfangende Antennen sind, die aus einem Material gebildet sind, das aus der Gruppe der Piezoelektrika und/oder Piezo-Verbundmaterialien gewählt ist.

10. Vorrichtung nach Anspruch 8, **dadurch gekennzeichnet, dass**, ist das polyphasische Medium ein in einer Leitung strömendes Fluid, die Sende- und die Empfangsmittel zu beiden Seiten der Leitung positioniert sind.

11. Vorrichtung nach Anspruch 8, **dadurch gekennzeichnet, dass**, ist das polyphasische, im Strömungsvorgang in der Leitung befindliche Medium ein Fluid, die Sendemittel und die Empfangsmittel auf der gleichen Seite der Leitung positioniert sind.

12. Vorrichtung nach einem der Ansprüche 8 bis 9, **dadurch gekennzeichnet, dass** die Sende- und Empfangsmittel eine Vielzahl von Elementen umfassen, welche die Rolle von Sendern und/oder Empfängern spielen.

13. Vorrichtung nach einem der Ansprüche 8 bis 13, **dadurch gekennzeichnet, dass** die ausgesendete Wellen Ultraschallwellen sind.

14. Anwendung des Verfahrens und der Vorrichtung nach einem der Ansprüche 1 bis 13 auf die Bestimmung des Geschwindigkeitsfelds der flüssigen Phase und der gasförmigen Phase eines polyphasischen Fluids, das wenigstens eine wässrige Phase, wenigstens eine flüssige Phase une wenigstens eine organische Phase umfasst.

15. Anwendung des Verfahrens und der Vorrichtung nach einem der Ansprüche 1 bis 13 auf die Bestimmung des Geschwindigkeitsfelds eines Erdölabstroms.

**FIG.1**

**FIG.1A**

FIG.2A

FIG.2B

FIG.2C

FIG.2D

FIG.2E

FIG.3